# EUROPÄISCHE PATENTSCHRIFT

(11) **EP 2 032 638 B1**
(45) Veröffentlichungstag und Bekanntmachung des Hinweises auf die Patenterteilung: **04.01.2017**
(21) Anmeldenummer: 07729775.2
(22) Anmeldetag: 01.06.2007
(51) Int. Cl.: C08K 5/01, C08K 5/098, C08L 33/08, C09J 133/08

(54) **KLEBSTOFF FÜR BODENBELÄGE**
ADHESIVE FOR FLOOR COVERINGS
ADHÉSIF POUR REVÊTEMENTS POUR LE SOL

(30) Priorität: 09.06.2006 EP 06115246
(43) Veröffentlichungstag der Anmeldung: 11.03.2009
(73) Patentinhaber: BASF SE, 67056 Ludwigshafen am Rhein (DE)
(72) Erfinder: WILDESON, Jacob, Charlotte, NC 28273 (US); CENTNER, Alexander, 67127 Rödersheim-Gronau (DE); SEIBERT, Horst, 67136 Fussgönheim (DE)
(74) Vertreter: BASF IP Association
(86) Internationale Anmeldenummer: PCT/EP2007/055374
(87) Internationale Veröffentlichungsnummer: WO 2007/141198

(56) Entgegenhaltungen:
- EP-A- 0 326 530
- EP-A- 0 701 822
- DE-A1- 3 924 047

## Beschreibung

Die Erfindung betrifft eine wässrige Zusammensetzung, enthaltend:
a) ein durch radikalische Polymerisation erhältliches Polymer
b) Abietinsäure und ihre Derivate
c) ein Mn-Salz einer organischen Säure
d) gegebenenfalls Füllstoff

Weiterhin betrifft die Erfindung die Verwendung der Zusammensetzung als Klebstoff, insbesondere zum Verkleben von Bodenbelägen.

Wässrige Klebstoffe für Bodenbeläge enthalten im allgemeinen ein polymeres Bindemittel und Füllstoffe. Aus EP-A 743 965 und EP-A 1 201 691 sind derartige Klebstoffe bekannt, die frei sind von organischen Lösemitteln oder Weichmachern.

Aus US 6,706,789 sind Klebstoffe für Bodenbeläge bekannt, die einen Vernetzer mit Oxazolingruppen enthalten; die Klebstoffe können darüber hinaus auch noch trocknende Öle (d.h. ungesättigte Öle) und Metallcarboxylate als Trocknungsbeschleuniger enthalten. Die Oxazolingruppen bewirken eine Vernetzung des Bindemittels, die Metallcarboxylate katalysieren zusätzlich eine Vernetzung (Trocknung) der trocknenden Öle. Die Klebstoffe nach der US 6,706,789 enthalten daher ein zwei Vernetzungssysteme und eine Vielzahl von Komponenten. EP-A2-326530 offenbart einen Klebstoff enthaltend, ein Polymer, Tallöll und Na-Stearat.

Gewünscht ist ein einfacheres Vernetzungssystem, welches mindestens gleich gute anwendungstechnische Eigenschaften bewirkt.

Bei flexiblen Bodenbelägen ist insbesondere ein gutes Nassanzugsvermögen (im englischen auch green strength genannt) und Trockenanzugsvermögen (im englischen auch open time) von anwendungstechnischer Bedeutung. Ein gutes Nassanzugsvermögen bedeutet, dass der Teppichboden nach Verlegen auf den mit dem Klebstoff beschichteten Untergrund zunächst noch ausgerichtet und die Lage korrigiert werden kann, dann aber bald eine rutschfeste Verklebung gegeben ist, deren Festigkeit mit fortlaufender Trocknung zunimmt.

Ein gutes Trockenanzugsvermögen bedeutet, dass auch nach längerer Ablüftzeit ein Teppichboden nach Verlegen auf den dann schon trockenen Untergrund einen festen Verbund ergibt.

Gewünscht sind daher Klebstoffe für, welche die vorstehenden Anforderungen möglichst gut erfüllen.

Demgemäß wurde die eingangs definierte Zusammensetzung gefunden. Gefunden wurde auch die Verwendung der Zusammensetzung als Klebstoff, insbesondere als Klebstoff für Bodenbeläge.

Die wässrige Zusammensetzung enthält mindestens folgende Bestandteile:
a) ein durch radikalische Polymerisation erhältliches Polymer
b) Abietinsäure und ihre Derivate
c) ein Mn-Salz einer organischen Säure
d) gegebenenfalls Füllstoff

### Zum Polymer a)

Das Polymer ist durch radikalische Polymerisation von ethylenisch ungesättigten Verbindungen (Monomere) erhältlich.

Das Polymer besteht vorzugsweise zu mindestens 40 Gew.- %, bevorzugt zu mindestens 60 Gew.- %, besonders bevorzugt zu mindestens 80 Gew.- % aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Als Alkyl(meth)acrylate zu nennen sind z.B. (Meth)acrylsäurealkylester mit einem C₁-C₁₀-Alkylrest, wie Methyl-methacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, Vinylstearat, Vinylpropionat, Versaticsäurevinylester und Vinylacetat.

Als vinylaromatische Verbindungen kommen Vinyltoluol, a- und p-Methylstyrol, a-Butyl-styrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Ethylen, Propylen, Butadien, Isopren und Chloropren genannt.

Als Hauptmonomere bevorzugt sind die C₁- bis C₂₀-Alkylacrylate und -methacrylate, insbesondere C₁- bis C₁₀-Alkylacrylate und -methacrylate und Vinylaromaten, insbesondere Styrol und Mischungen der Alkyl(meth)acrylate mit Styrol.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Besonders bevorzugt besteht das Polymer zu mindestens 40 Gew.-%, insbesondere mindestens 60 Gew.-% und ganz besonders bevorzugt zu mindestens 80 Gew.-% aus C₁-C₂₀, insbesondere C₁-C₁₀- Alkyl(meth)acrylaten

Neben den Hauptmonomeren kann das Polymer weitere Monomere enthalten, z.B. Monomere mit Carbonsäure, Sulfonsäure oder Phosphonsäuregruppen. Bevorzugt sind Carbonsäuregruppen. Genannt seien z.B. Acrylsäure, Methacrylsäure, Itaconsäure, Maleinsäure oder Fumarsäure.

Weitere Monomere sind z.B. auch Hydroxylgruppen enthaltende Monomere, insbesondere C₁-C₁₀-Hydroxyalkyl(meth)acrylate, (Meth)acrylamid.

Als weitere Monomere seien darüber hinaus Phenyloxyethylglykolmono-(meth-)acrylat, Glycidylacrylat, Glycidylmethacrylat, Amino- (meth-)acrylate wie 2-Aminoethyl-(meth-) acrylat genannt.

Als weitere Monomere seien auch vernetzende Monomere genannt.

Ganz besonders bevorzugt enthält das Polymer 0,1 bis 5 Gew. % Monomeren mit Carbonsäuregruppen.

Die Glasübergangstemperatur des Polymeren beträgt vorzugsweise -60 bis 0 °C, besonders bevorzugt -60 bis -10 °C und ganz besonders bevorzugt -60 bis -20 °C.

Die Glasübergangstemperatur lässt sich nach üblichen Methoden wie Differentialthermoanalyse oder Differentail Scanning Calorimetrie (s. z.B. ASTM 3418/82, sog. "midpoint temperature") bestimmen.

Die Herstellung der Polymere erfolgt in einer bevorzugten Ausführungsform durch Emulsionspolymerisation, es handelt sich daher um ein Emulsionspolymerisat.

Die Herstellung kann jedoch z.B. auch durch Lösungspolymerisation und anschließende Dispergierung in Wasser erfolgen.

Bei der Emulsionspolymerisation werden ionische und/oder nicht -ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 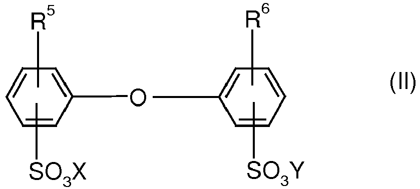 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natrium-peroxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die die Molmasse verringert wird. Geeignet sind z.B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten.

Im Rahmen der vorliegenden Erfindung ist ein Feststoff Gehalt von 50 bis 75 Gew. %, insbesondere 55 bis 75 Gew. % bevorzugt.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81 083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Das so hergestellte Polymer wird vorzugsweise in Form seiner wässrigen Dispersion verwendet.

### Zu b)

Die Zusammensetzung enthält ferner ein tricyclisches Diterpenderivat oder ein Gemisch von tricyclischen Diterpenderivaten (kurz tricyclisches Diterpen genannt).

Terpene sind Kohlenwasserstoffe mit 10 C Atomen (zwei Isopreneinheiten), Diterpene sind Kohlenwasserstoffe mit 20 C Atomen (4 Isopreneinheiten). In dem tricyclischen Diterpen bilden die 4 Isopreneinheiten ein Drei-Ringsystem mit 3 zusammenhängenden aliphatischen 6-Ringen und aliphatischen Substituenten (Alkylgruppen und eine Carbonsäuregruppe) aus. Die bevorzugte Grundstruktur ist die des Abietans.

In den tricyclischen Diterpen kann die Grundstruktur modifiziert sein, z. B. durch chemische Umsetzung. Insbesondere können die Wasserstoffatome durch andere organische Gruppen durch chemische Umsetzungen ersetzt sein (Derivate); in Betracht kommt insbesondere eine Veresterung der Carbonsäuregruppe.

Die tricyclischen Diterpene enthalten nicht-aromatische Doppelbindungen, im allgemeinen enthalten sie ein oder zwei Doppelbindungen. Die Doppelbindungen können auch zu Einfachbindungen hydriert sein, der Gehalt an Doppelbindungen im tricyclischen Diterpen beträgt vorzugsweise mindestens 0,01, besonders bevorzugt mindestens 0,05, ganz besonders bevorzugt mindestens 0,1 Mol, bzw. mindestens 0,2 Mol auf 100 g tricyclisches Diterpen; der maximale Gehalt beträgt bei zwei Doppelbindungen pro Molekül ca 0,6 Mol /100 g tricyclisches Diterpen.

Das Molgewicht der cyclischen Diterpene liegt im allgemeinen zwischen 264 (C20 Tricyclus) und 400, je nach Anzahl und Art der Substituenten.

Tricyclische Diterpene können synthetisch hergestellt werden; bevorzugt werden Naturstoffe verwendet. Als Naturstoffe genannt seine insbesondere Abietinsäure. Abietinsäure, bzw Abietinsäurederivate werden auch als Kolophoniumharze, im englischen überwiegend als Rosin bezeichnet.
Das tricyclische Diterpen hat vorzugsweise eine Glasübergangstemperatur von 0 bis 90°C, besonders bevorzugt von 40 bis 85°C.

Die Menge des tricyclischen Diterpens beträgt vorzugsweise 1 bis 300, besonders bevorzugt 10 bis 150 und ganz besonders bevorzugt 30 bis 120 Gew.-teile auf 100 Gew.-teile Polymer.

### zu c)

Die wässrige Zusammensetzung enthält ferner ein Metallsalz einer organischen Säure.

Derartige Metallsalze werden als Beschleuniger für die oxidative Filmhärtung verwendet und sind auch unter dem begriff "Sikkative" bekannt.

Als Metallkommt bevorzugtals Nebengruppenmetall Mangan in Betracht. Das Metall liegt im Metallsalz als Kation vor.

Bei der organischen Säure handelt es sich vorzugsweise um eine Carbonsäure, welche im Salz als Carboxylatanion vorliegt. Das Carboxylatanion hat vorzugsweise mindestens 4, insbesondere mindestens 6 C-Atome, besonders bevorzugt mindestens 8 und ganz besonders bevorzugt mindestens 10 C-Atome. Es kann sich um aliphatische Carboxylate, insbesondere auch um cycloaliphatische Carboxylate und auch ungesättigte aliphatische Carboxylate oder deren Gemische handeln. In Betracht kommen z. B. sogenannte Naphtensäuren (dabei handelt es sich um Cyclohexancarbonsäuren, Cyclopentancarbonsäuren oder deren Gemische) oder lineare aliphatische Fettsäuren mit 8 bis 24 C Atomen, wie Ölsäure oder Linolsäure.

Die Menge des Metallsalzes beträgt vorzugsweise 0,001 bis 10 Gew.-teile, besonders bevorzugt 0,005 bis 1 Gew.-teile und ganz besonders bevorzugt 0,01 bis 0,5 Gew.-teile, bezogen auf das tricyclische Diterpen.

### zu d)

In einer bevorzugten Ausführungsform enthält der Klebstoff Füllstoffe.

Als Füllstoffe kommen insbesondere anorganische Füllstoffe, besonders bevorzugt Weißpigmente in Betracht. Genannt seien z.B.Calciumcarbonat oder Silikate. Feingemahlene oder gefälltes Calciumcarbonat (Kreide) oder Quarzmehl haben z. B. einen mittleren Teilchendurchmesser von im allgemeinen zwischen 2 und 100 µm, es kommen jedoch auch gröbere Teilchen in Betracht.

Die Menge der Füllstoffe kann z. B. 10 bis 400 Gew. Teile auf 100 Gew. Teile Polymer.

### Weiteres zur Zusammensetzung

Die wässrige Zusammensetzung kann neben den Bestandteilen a) bis d) weitere Bestandteile enthalten, genannt seien z.B. Verdicker, Entschäumer, Konservierungsmittel oder Benetzungsmittel bzw. Dispergierhilfsmittel.

Benetzungsmittel sind z.B. Fettalkoholethoxylate, Alkylphenolethoxylate, Sulfobernsteinsäureester, Nonylphenolethoxylate, Polyoxyethylene/-propylene oder Natriumdodecylsulfonate.

Benetzungsmittel können z.B. in Mengen von 0 bis 5 Gew. Teile, Verdicker in Mengen von 0 bis 10 Gew-teile, Konservierungsmittel in Mengen von 0 bis 3 Gew.-teilen und Entschäumer in Mengen von 0 bis 10 Gew. Teilen auf 100 gew. Teile Polymer (fest, ohne Lösungsmittel) in der wässrigen Zusammensetzung enthalten sein.

Die wässrige Zusammensetzung ist für viele Anwendungen vorzugsweise im wesentlichen frei, vorzugsweise frei von organischen Lösungsmitteln und Weichmachern wie z.B. Butylacetat, Toluol oder Phthalsäureester. Sie enthält daher organische Verbindungen mit einem Siedepunkt unterhalb 300 °C bei Normaldruck (1 bar) in Mengen unter vorzugsweise 0,5 Gew.-teilen besonders bevorzugt unter 0,1 Gew.-teilen, ganz besonders bevorzugt unter 0,05 Gew.-teilen und insbesondere unter 0,01 Gew.-teilen auf 100 Gew.-teile Polymer (fest, ohne Lösungsmittel). Besonders bevorzugt erfüllt die Zusammensetzung die Anforderungen der Emissionsfreiheit, wie sie von der Gemeinschaft Emissionskontrollierter Verlegewerkstoffe definiert werden.

Die Emissionen werden mit einer Kammerprüfmethode bestimmt. Der Fußbodenklebstoff bzw. die erfindungsgemäße Zusammensetzung wird mit 300 g/m² auf eine Glasplatte aufgetragen, deren Größe sich nach dem Kammervolumen richtet. Die Beladung der Kammer beträgt 0,4 m² der beschichteten Glasplatte pro m³ Kammervolumen. Die Emissionsbedingungen in der Edelstahlprüfkammer (Volumen mindestens 125 Liter) sind 23 °C, 50 % rel. Luftfeuchte und ein stündlicher Luftwechsel der einen Austausch der gesamten Luft alle 2 Stunden bewirkt. Nach 10 Tagen werden die Langzeitemissionen bestimmt. Dazu wird ein definiertes Volumen des Luftstroms über Adsorbentien geleitet. Nach Desorption werden die emittierten Stoffe gaschromatographisch (GC-MS-Kopplung) oder flüssigkeitschromatographisch bestimmt. Die Langzeitemissionen werden in mg/m³ bestimmt, wobei Toluol als Standardsubstanz eingesetzt wird. Emittierte Substanzen, deren Kammerkonzentration größer als 20 mg/m³ ist, werden identifiziert und mit der identifizierten Reinsubstanz und kalibriert. Emittierte Substanzen, deren Kammerkonzentration kleiner als 20 mg/m³ ist, werden nicht einzeln identifiziert. Die Kalibrierung erfolgt in diesen Fällen mit Toluol.

Die Werte aller Substanzen werden addiert.

Im Falle der erfindungsgemäßen Zusammensetzung beträgt der Emissionswert für die Summe aller organischen Verbindungen maximal vorzugsweise 1500 mg/m³, und insbesondere maximal 500 mg/m³.

Die wässrige Zusammensetzung benötigt keinen Gehalt an weiteren Vernetzern. Vorzugsweise enthält die Zusammensetzung keine Oxazolingruppen und besonders bevorzugt auch keine trocknenden Öle oder auch keine sonstigen Vernetzer.

Die Herstellung des wässrigen Klebstoffs kann in einfacher Weise z.B. dadurch erfolgen, daß der bei der Emulsionspolymerisation erhaltenen wässrigen Polymerdispersion des Polymeren die Bestandteil b) bis d)und gegebenenfalls weitere Zusatzstoffe unter Rühren zugesetzt werden.

Der Feststoffgehalt der wässrigen Zusammensetzung beträgt vorzugsweise 50 bis 95 Gew.-%, besonders bevorzugt 60 bis 90 Gew.-% und ganz besonders bevorzugt 70 bis 85 Gew.-%; der Wassergehalt der wässrigen Zusammensetzung beträgt entsprechend vorzugsweise 5 bis 50 Gew.-%, besonders bevorzugt 10 bis 40 Gew.-% und ganz besonders bevorzugt 15 bis 30 Gew.-%.

### Zur Verwendung

Die erfindungsgemäße Zusammensetzung eignet sich insbesondere als Klebstoff.

Insbesondere eignet sich die Zusammensetzung als einkomponentiger (1 K) Klebstoff, d. h. als Klebstoff der vor der Verwendung keinen Zusatz eines Vernetzers oder sonstiger reaktiver Verbindungen benötigt. Der Klebstoff enthält daher bereits alle notwendigen Bestandteile und ist lagerstabil.

Die erfindungsgemäße Zusammensetzung kann zum dauerhaften Verbinden beliebiger Formteile verwendet werden. Die zu verbindenden Formteile können aus unterschiedlichsten Materialien, z. B. aus Holz, Metall, Kunststoffen, Leder, Keramik oder sonstiges bestehen; die zu verbindenden Formteile können aus dem gleichen oder verschiedenen Materialien sein. Derartige Klebstoffe werden auch industrielle Klebstoffe oder Montagekleber genannt.

Sehr gut eignet sich die Zusammensetzung als Klebstoff für Bodenbeläge. In Betracht kommen dabei sowohl flexible Bodenbeläge wie Teppichböden als auch nicht-flexible Bodenbeläge wie Parkett- oder Laminatböden.

Bei den zu verklebenden Bodenbelägen handelt es sich ganz besonders bevorzugt um flexible Bodenbeläge.

Flexible Bodenbeläge sind insbesondere Teppichböden oder sonstige Bodenbeläge z. B. aus PVC (in Ausführungen als Mehrschichtbeläge oder Homogenbeläge), Schaumstoffbeläge mit Textilunterseite (z. B. Jute), Polyestervlies, Gummibeläge, Textilbeläge, z. B. auch mit unterschiedlicher Rückenausstattung (wie Polyurethanschaum, StyrolButadien-Schaum, textiler Zweitrücken), Nadelfilzbodenbeläge, Polyolefinbeläge oder Linoleumbeläge.

Diese flexiblen Bodenbeläge können auf Untergründe, z.B. aus Holz, Kunststoff, mineralische Untergründe wie Estrich, Beton, keramische Fliesen, Metalluntergründe oder ähnliches geklebt werden.

Der Klebstoff kann, z.B. mit einer Zahnleiste, auf den Untergrund aufgetragen werden, danach wird der Bodenbelag aufgelegt.

Bei der erfindungsgemäßen Verwendung erreicht man ein gutes Niveau von anwendungstechnischen Eigenschaften wie Schälfestigkeit, Scherfestigkeit, Nassanzugsvermögen, Trockenanfassvermögen und Wärmestandfestigkeit. Die Zusammensetzung, bzw. der Klebstoff ist einfach herstellbar (das Sikkativ c) braucht nur eingerührt zu werden und ist bei der Anwendung auch aufgrund seiner Rheologie gut verarbeitbar. Insbesondere ist er auch lagerstabil, eine Hautbildung auf der Oberfläche des Klebstoffs ist auch nach Tagen nicht oder kaum zu beobachten.

### Beispiele

### 1. Herstellung der Polymeren durch Emulsionspolymerisation

Unterschiedliche Polymere A) wurden durch übliche Emulsionspolymerisation unter Verwendung einer Polystyrolsaat (0,2 Gew.-Teile auf 100 Gew.-teile Monomere) und 0,5 Gew.-teile Natriumpersulfat als Initiator und 1 Gew.-Teil Disponil® FES 77 (ein ethoxyliertes Natriumsulfat,Cognis Deutschland GmbH & Co.KG, Düsseldorf) und 0,5 Gew.-Teile Lumiten® -ISC (Bernsteinsäureester, BASF AG) als Emulgatoren hergestellt.

Die Zusammensetzung der Polymerisate ist in Tabelle 1 angegeben:

**Tabelle 1: Polymerdispersionen 1 bis 5**

| Gew.-Teile | 1 | 2 | 3 | 4 |
|---|---|---|---|---|
| EA | | | 31,5 | |
| MA | 9 | | | 19 |
| MMA | | 10,5 | | |
| AS | 2 | 2 | 2 | 2 |
| AN | 5 | | | |
| BA | 84 | 87,5 | 66,5 | 79 |
| tDMK | 0,3 | 0,3 | 0,3 | 0,3 |
| FG Gew.-% | 55,6 | 54,7 | 54,9 | 54,9 |

- EA:: Ethylacrylat
- MA:: Methylacrylat
- MMA:: Methylmethacrylat
- AS:: Acrylsäure
- AN:: Acrylnitril
- BA:: n-Butylacrylat
- tDMK:: Molekulargewichtsregler tertiär Dodecylmercaptan (angegeben sind Gew.-Teile auf 100 Gew.-Teile Monomere)
- FG:: Feststoffgehalt

### 2. Zusammensetzung der wässrigen Klebstoffe

Die Polymerdispersionen 1 bis 5 wurden auf einen Feststoffgehalt von 55 % eingestellt, die weiteren Bestandteile wurden zur Polymerdispersion gegeben und verrührt.

Die Klebstoffe waren wie folgt zusammengesetzt:
- 27,3 Gew.-%: Polymerdispersion, mit NaOH auf pH 8 eingestellt
- 9,3 Gew.-%: Latekoll® D Lösung (3 %ig), (Verdicker, BASF AG)
- 19,0 Gew.-%: Abietinsäurederivate (Gemische aus 45 Gew.-% Dercol M10-B, Willers, Engel & Co., Hamburg sowie 55 Gew.-% Bremasin 1205, Robert Krämer GmbH & Co. KG, Rastede)
- 0,2 Gew.-%: Agitan^{®} 282 (Entschäumer, Münzing Chemie GmbH, Heilbronn)
- 1,0 Gew.-%: Pigmentverteiler® NL (Dispergierhilfsmittel, BASF AG)
- 43,2 Gew.-%: Calciumcarbonat (Ulmer Weiß XM, Eduard Merkle GmbH & Co., Blaubeuren)
- 0,1 oder 0,5 Gew.-%: Soligen Mangan^{®} 6 aqua (Sikkativ, Borchers GmbH, Langenfeld)

### II. Anwendungstechnische Prüfung

### Naßanzugsvermögen (NAV)

Der Klebstoff wird mit einem DIN-Rakel auf eine Zementfaserplatte (20 x 50 cm) in Abzugsrichtung ausgetragen. Auftragsmenge ca. 350 - 400 g/m2. Nadelfilzbeläge (NBB Streifen) werden nach 10 Minuten Ablüften in das Kleberbett eingelegt und mit einer 2,5 kg Walze durch 3 mal Hin- und Herrollen angepresst. In den angegebenen Zeitabständen werden die Beläge mit einem Abzugsgerät abgezogen und dabei die Zunahme des Abschälwiderstandes in N 5 cm bestimmt.

### Trockenanfaßvermögen (TAV)

Der Klebstoff wird mit DIN-Rakel auf eine Zementfaserplatte (20 x 50) in Abzugsrichtung aufgetragen. Auftragsmenge ca. 250 - 300 mg/m2. PVC Streifen werden nach unterschiedlicher Ablüftzeit in das Kleberbett eingelegt und mit einer 2,5 kg Walze durch Hin- und Herrollen (3x) angepreßt. Anschließend werden die Streifen mit einem Abzugsgerät abgezogen und der Abschälwiderstand in N 5 cm bestimmt.

### Wärmestandfestigkeit

Zementfaserplatte wurden mit einem PVC-Bodenbelag (Verklebungsfläche 5 x 2 cm und 14 Zage im Normklima (1bar, 23,5°C) gelagert. Danach wurden sie 30 Minuten bei 50 °C im Umluftschrank temperiert, anschließend hängend mit 2 kg belastet. Als maß für die Wärmestandfestigkeit gilt die Zeit bis zum Auftrennen der Verklebung.

### Dynamische Scherfestigkeit

Eichenholzstäbchen wurden mit dem Klebstoff beschichtet (Rakel: Spaltbreite 3,3 mm, Spalttiefe 3 mm) und miteinander überlappend verklebt (verklebte Fläche 26 x 23 mm) und 1 Minute mit 2 Kilo Gewicht angedrückt. Nach der angegebenen Lagerungszeit im Normklima (1 bar, 23,5 °C) wurde die Scherfestigkeit (in N/mm²) in einer Zugprüfmaschine bestimmt.

Die Ergebnisse sind in Tabelle 3 aufgeführt.

**Tabelle 3:**

| | | | | | | |
|---|---|---|---|---|---|---|
| Dispersion | 1 | 1 | 1 | 2 | 2 | 2 |
| Sikkativ in Gew.-% | 0 | 0,1 | 0,5 | 0 | 0,1 | 0,5 |
| NAV [N/5 cm] | | | | | | |
| 10 min | 12 | 9 | 9 | 9 | 9 | 10 |
| 15 min | 22 | 19 | 17 | 17 | 17 | 16 |
| 20 min | 29 | 26 | 28 | 24 | 23 | 25 |
| 30 min | 41 | 39 | 42 | 31 | 32 | 33 |
| TAV [N/5cm] | | | | | | |
| 10 min | 1 | 1 | 2 | 2 | 4 | 1 |
| 20 min | 5 | 5 | 10 | 4 | 3 | 9 |
| 30 min | 2 | 2 | 3 | 2 | 1 | 3 |
| 45 min | 1 | 1 | 2 | 1 | 1 | 1 |
| WSF [min] | 34 | 105 | >1440 | 13 | >1440 | >1440 |
| Dynamische Scherfestigkeit [N/mm²] | | | | | | |
| Nach 7 Tagen Lagerung | 1,4 | 1,6 | 2,0 | 0,7 | 1,4 | 1,8 |
| Nach 14 Tagen Lagerung | 1,2 | 2,9 | 2,8 | 1,0 | 1,9 | 2,7 |
| | | | | | | |
| Dispersion | 3 | 3 | 3 | 4 | 4 | 4 |
| Sikkativ in Gew.-% | 0 | 0,1 | 0,5 | 0 | 0,1 | 0,5 |
| NAV [N/5cm] | | | | | | |
| 10 min | 15 | 12 | 13 | 10 | 10 | 8 |
| 15 min | 24 | 19 | 21 | 22 | 17 | 12 |
| 20 min | 28 | 27 | 27 | 27 | 25 | 23 |
| 30 min | 38 | 33 | 33 | 34 | 31 | 32 |
| TAV [N/5cm] | | | | | | |
| 10 min | 1 | 1 | 3 | 2 | 1 | 1 |
| 20 min | 8 | 8 | 7 | 4 | 6 | 8 |
| 30 min | 2 | 3 | 7 | 2 | 3 | 4 |
| 45 min | 2 | 2 | 2 | 1 | 2 | 4 |
| WSF [min] | 74 | >144 0 | >1440 | 53 | >1440 | >1440 |
| Dynamische Scherfestigkeit [N/mm²] | | | | | | |
| Nach 7 Tagen Lagerung | 0,9 | 1,3 | 1,3 | 1,1 | 1,4 | 1,8 |
| Nach 14 Tagen Lagerung | 0,9 | 1,8 | 2,1 | 1,1 | 2,2 | 2,4 |

## Patentansprüche

1. Wässrige Zusammensetzung, enthaltend
a) ein durch radikalische Polymerisation erhältliches Polymer
b) Abientinsäure und ihre Derivate
c) ein Mn-Salz einer organischen Säure
d) gegebenenfalls Füllstoff.

2. Zusammensetzung gemäß Anspruch 1, **dadurch gekennzeichnet, dass** das Polymer zu mindestens 40 Gew. % aus sogenannten Hauptmonomeren, ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren aufgebaut ist.

3. Zusammensetzung gemäß Anspruch 2, **dadurch gekennzeichnet, dass** das Polymer zu mindestens 40 Gew. % aus C1 bis C 20 Alkyl(meth)acrylaten besteht.

4. Zusammensetzung gemäß einem der Ansprüche 1 bis 3, **dadurch gekennzeichnet, dass** die Glasübergangstemperatur des Polymeren -60 bis 0 °C beträgt.

5. Zusammensetzung gemäß einem der Ansprüche 1 bis 4, **dadurch gekennzeichnet, dass** es sich bei dem Polymeren um ein Emulsionspolymerisat handelt und das Polymer in Form einer wässrigen Polymerdispersion vorliegt.

6. Zusammensetzung gemäß einem der Ansprüche 1 bis 5, **dadurch gekennzeichnet, dass** der Feststoffgehalt der wässrigen Polymerdispersion 50 bis 75, insbesondere 55 bis 70 Gew. % beträgt.

7. Zusammensetzung gemäß einem der Ansprüche 1 bis 6 bis 8 **dadurch gekennzeichnet, dass** die Menge Abientinsäure oder ihrer Derivate 1 bis 300 Gew. teile auf 100 Gew. teile Polymer beträgt.

8. Zusammensetzung gemäß einem der Ansprüche 1 bis 7 bis 9 **dadurch gekennzeichnet, dass** es bei dem Metallsalz um das Salz einer Carbonsäure, d.h. um ein Carboxylat handelt.

9. Zusammensetzung gemäß einem der Ansprüche 1 bis 8 bis 10 **dadurch gekennzeichnet, dass** es bei dem Metallsalz um das Salz einer Carbonsäure mit mindestens 6 C-Atomen handelt.

10. Zusammensetzung gemäß einem der Ansprüche 1 bis 9, **dadurch gekennzeichnet, dass** es bei dem Metallsalz um das Salz einer Carbonsäure mit mindestens 4 C-Atomen handelt.

11. Zusammensetzung gemäß einem der Ansprüche 1 bis 10, **dadurch gekennzeichnet, dass** die Menge des Mn-Salzes 0,001 bis 10 Gew. teile auf 100 Gew. teile Abientinsäure oder ihrer Derivate beträgt.

12. Zusammensetzung gemäß einem der Ansprüche 1 bis 11, **dadurch gekennzeichnet, dass** die Zusammensetzung 10 bis 400 Gew. Teile Füllstoffe, bezogen auf 100 Gew. Teile Polymer enthält.

13. Zusammensetzung gemäß einem der Ansprüche 1 bis 12, **dadurch gekennzeichnet, dass** der Gehalt von organischen Verbindungen mit einem Siedepunkt unter 300°C (1 bar) in der Zusammensetzung kleiner 0,5 Gew. % ist.

14. Zusammensetzung gemäß einem der Ansprüche 1 bis 13, **dadurch gekennzeichnet, dass** die Zusammensetzung keine Oxazolin-gruppen enthält.

15. Zusammensetzung gemäß einem der Ansprüche 1 bis 14, **dadurch gekennzeichnet, dass** sie keine sonstigen Vernetzer enthält.

16. Zusammensetzung gemäß einem der Ansprüche 1 bis 15, **dadurch gekennzeichnet, dass** der Feststoffgehalt der Zusammensetzung 50 bis 95 Gew. % beträgt.

17. Verwendung der Zusammensetzung gemäß einem der Ansprüche 1 bis 16, als Klebstoff.

18. Verwendung der Zusammensetzung gemäß einem der Ansprüche 1 bis 17, als einkomponentiger (1 K) Klebstoff, d.h. als Klebstoff der vor der Verwendung keinen Zusatz eines weiteren Vernetzers oder sonstiger reaktiver Verbindungen benötigt.

19. Verwendung der Zusammensetzung gemäß einem der Ansprüche 1 bis 17 als Klebstoff für Bodenbeläge.

20. Verwendung der Zusammensetzung gemäß einem der Ansprüche 1 bis 17 als Klebstoff für flexible Bodenbeläge, insbesondere für Teppichböden.

21. Verwendung der Zusammensetzung gemäß einem der Ansprüche 1 bis 18 als Klebstoff für Bodenbeläge **dadurch gekennzeichnet, dass** der Klebstoff auf den Untergrund aufgetragen und anschließend der Bodenbelag aufgelegt wird.

## Claims

1. An aqueous composition comprising
a) a polymer obtainable by free-radical polymerization
b) abietic acid and derivatives thereof
c) a Mn salt of an organic acid
d) optionally filler.

2. The composition according to claim 1, wherein the polymer has been formed to an extent of at least 40% by weight of main monomers selected from C1 to C20 alkyl (meth)acrylates, vinyl esters of carboxylic acids comprising up to 20 carbon atoms, vinylaromatics having up to 20 carbon atoms, ethylenically unsaturated nitriles, vinyl halides, vinyl ethers of alcohols comprising from 1 to 10 carbon atoms, aliphatic hydrocarbons having from 2 to 8 carbon atoms and one or two double bonds, or mixtures of these monomers.

3. The composition according to claim 2, wherein the polymer consists to an extent of at least 40% by weight of C1 to C20 alkyl (meth)acrylates.

4. The composition according to any of claims 1 to 3, wherein the glass transition temperature of the polymer is from -60 to 0°C.

5. The composition according to any of claims 1 to 4, wherein the polymer is an emulsion polymer and the polymer is present in the form of an aqueous polymer dispersion.

6. The composition according to any of claims 1 to 5, wherein the solids content of the aqueous polymer dispersion is from 50 to 75% by weight, in particular from 55 to 70% by weight.

7. The composition according to any of claims 1 to 6, wherein the amount of abietic acid or derivatives thereof is from 1 to 300 parts by weight per 100 parts by weight of polymer.

8. The composition according to any of claims 1 to 7 to 9, wherein the metal salt is the salt of a carboxylic acid, i.e. is a carboxylate.

9. The composition according to any of claims 1 to 8 to 10, wherein the metal salt is the salt of a carboxylic acid having at least 6 carbon atoms.

10. The composition according to any of claims 1 to 9, wherein the metal salt is the salt of a carboxylic acid having at least 4 carbon atoms.

11. The composition according to any of claims 1 to 10, wherein the amount of the Mn salt is from 0.001 to 10 parts by weight per 100 parts by weight of abietic acid or derivatives thereof.

12. The composition according to any of claims 1 to 11, wherein the composition comprises from 10 to 400 parts by weight of fillers based on 100 parts by weight of polymer.

13. The composition according to any of claims 1 to 12, wherein the content of organic compounds having a boiling point below 300°C (1 bar) in the composition is less than 0.5% by weight.

14. The composition according to any of claims 1 to 13, which does not comprise any oxazoline groups.

15. The composition according to any of claims 1 to 14, which does not comprise any other crosslinkers.

16. The composition according to any of claims 1 to 15, wherein the solids content of the composition is from 50 to 95% by weight.

17. The use of the composition according to any of claims 1 to 16 as an adhesive.

18. The use of the composition according to any of claims 1 to 17 as a one-component (1K) adhesive, i.e. as an adhesive which, before use, does not require any addition of a further crosslinker or other reactive compounds.

19. The use of the composition according to any of claims 1 to 17 as an adhesive for floorcoverings.

20. The use of the composition according to any of claims 1 to 17 as an adhesive for flexible floorcoverings, especially for carpet backings.

21. The use of the composition according to any of claims 1 to 18 as an adhesive for floorcoverings, wherein the adhesive is applied to the substrate and the floorcovering is then laid on.

## Revendications

1. Composition aqueuse, contenant
a) un polymère pouvant être obtenu par polymérisation radicalaire,
b) de l'acide abiétique et ses dérivés,
c) un sel organique du Mn
d) le cas échéant une charge.

2. Composition selon la revendication 1, **caractérisée en ce que** le polymère est constitué, à raison d'au moins 40% en poids, de monomères appelés principaux choisis parmi les (méth)acrylates de C₁-C₂₀-alkyle, les esters vinyliques d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contenant 1 à 10 atomes de carbone, les hydrocarbures aliphatiques comprenant 2 à 8 atomes de carbone et une ou deux doubles liaisons ou des mélanges de ces monomères.

3. Composition selon la revendication 2, **caractérisée en ce que** le polymère est constitué à raison d'au moins 40% en poids de (méth)acrylates d'alkyle en C₁ à C₂₀.

4. Composition selon l'une quelconque des revendications 1 à 3, **caractérisée en ce que** la température de transition vitreuse du polymère est de -60 à 0°C.

5. Composition selon l'une quelconque des revendications 1 à 4, **caractérisée en ce qu'**il s'agit, pour le polymère, d'un polymère en émulsion et le polymère se trouve sous forme d'une dispersion aqueuse de polymère.

6. Composition selon l'une quelconque des revendications 1 à 5, **caractérisée en ce que** la teneur en solides de la dispersion aqueuse de polymère est de 50 à 75, en particulier de 55 à 70% en poids.

7. Composition selon l'une quelconque des revendications 1 à 6 à 8, **caractérisée en ce que** la quantité d'acide abiétique ou de ses dérivés est de 1 à 300 parties en poids pour 100 parties en poids de polymère.

8. Composition selon l'une quelconque des revendications 1 à 7 à 9, **caractérisée en ce qu'**il s'agit, pour le sel métallique, du sel d'un acide carboxylique, c'est-à-dire d'un carboxylate.

9. Composition selon l'une quelconque des revendications 1 à 8 à 10, **caractérisée en ce qu'**il s'agit, pour le sel métallique, du sel d'un acide carboxylique comprenant au moins 6 atomes de carbone.

10. Composition selon l'une quelconque des revendications 1 à 9, **caractérisée en ce qu'**il s'agit, pour le sel métallique, du sel d'un acide carboxylique comprenant au moins 4 atomes de carbone.

11. Composition selon l'une quelconque des revendications 1 à 10, **caractérisée en ce que** la quantité du sel de Mn est de 0,001 à 10 parties en poids pour 100 parties en poids d'acide abiétique ou de ses dérivés.

12. Composition selon l'une quelconque des revendications 1 à 11, **caractérisée en ce que** la composition contient 10 à 400 parties en poids de charges par rapport à 100 parties en poids de polymère.

13. Composition selon l'une quelconque des revendications 1 à 12, **caractérisée en ce que** la teneur en composés organiques présentant un point d'ébullition inférieur à 300°C (1 bar) dans la composition est inférieure à 0,5% en poids.

14. Composition selon l'une quelconque des revendications 1 à 13, **caractérisée en ce que** la composition ne contient pas de groupes oxazoline.

15. Composition selon l'une quelconque des revendications 1 à 14, **caractérisée en ce qu'**elle ne contient pas d'autre réticulant.

16. Composition selon l'une quelconque des revendications 1 à 15, **caractérisée en ce que** la teneur en solides de la composition est de 50 à 95% en poids.

17. Utilisation de la composition selon l'une quelconque des revendications 1 à 16 comme adhésif.

18. Utilisation de la composition selon l'une quelconque des revendications 1 à 17 comme adhésif à un composant (1C), c'est-à-dire comme adhésif qui ne nécessite pas d'addition d'un autre réticulant ni d'autres composés réactifs avant l'utilisation.

19. Utilisation de la composition selon l'une quelconque des revendications 1 à 17 comme adhésif pour des revêtements de sol.

20. Utilisation de la composition selon l'une quelconque des revendications 1 à 17 comme adhésif pour des revêtements de sol souples, en particulier pour des tapis de sol.

21. Utilisation de la composition selon l'une quelconque des revendications 1 à 18 comme adhésif pour des revêtements de sol, **caractérisé en ce que** l'adhésif est appliqué sur le substrat et le revêtement de sol est ensuite placé.
